# EUROPEAN PATENT APPLICATION

(11) **EP 1 672 938 A1**
(43) Date of publication of application: **21.06.2006**
(21) Application number: 04029569.3
(22) Date of filing: 14.12.2004
(51) Int. Cl.: H04Q 7/32, G06F 9/445

(54) **Portable radio communication equipment enabling a firmware update of a connected accesory over the air**

(71) Applicant: Sony Ericsson Mobile Communications AB, 221 88 Lund (SE)
(72) Inventor: Thijssen, Jeroen, 230 40 Bara (SE)
(74) Representative: Körber, Martin Hans

(57) **Abstract**

The present invention relates to a portable radio communication equipment (1) for communication in a wireless communication system, with transmitting and receiving means (3) for transmitting and receiving information signals in said wireless communication system, data interface means (7, 8, 9, 10, 11) for exchanging data with a further equipment (20), control means (2) for controlling the communication in said wireless communication system and the data exchange via said data interface means, whereby said control means (2) enables a firmware update of said further equipment (20) by receiving firmware update information via said wireless communication system and forwarding said received firmware update information to said further equipment (20) via said data interface means (7, 8, 9, 10, 11).

Further, the present invention relates to an accessory device and a method for controlling the portable radio communication equipment and the accessory device.

## Description

### TECHNICAL FIELD OF THE INVENTION

The present invention relates to a portable radio communication equipment for communication in a wireless communication system as well as a method for controlling such a portable radio communication equipment.

### DESCRIPTION OF RELATED ART

Currently, in portable radio communication equipments, such as mobile telephones, communicators and so forth, for the communication in wireless communication systems, such as GSM, UMTS or any other available or future system, one concern is the possibility of updating software or firmware of the portable radio communication equipment over the air, i. e. via the wireless communication system. Hereby, for example for the GSM system it is known to obtain the current software or firmware version of a portable radio communication equipment by means of a so-called AT command. Hereby, a specific AT command is sent from an update server or the like via a base station of the respective wireless communication system to the portable radio communication equipment, in which the AT command is processed and the current software or firmware version is sent in an answer back to the update server. In the update server, a so-called software or firmware delta is created or retrieved from a corresponding data base. The software or firmware delta comprises the essential differences between the current software or firmware version stored and used in the portable radio communication equipment and the latest available firmware or software version. A corresponding delta updating information is then sent via the wireless communication system back to the portable radio communication equipment, in which this delta updating information is processed and used to update the software or firmware and to bring the software or firmware to the latest available status. Corresponding systems are for example available from the company Red Bend (www. redbend. com). Further, the OTA flash forum (over-the-air flash forum) works on the development of a standard for this so-called FOTA technology (firmware-over-the-air technology).

The currently known systems and technologies, however, do not provide any suggestions or solutions in relation to the firmware or software update of accessories for portable radio communication equipments. Very often, the software or firmware versions of the accessories are not up-to-date and/or are not matching the corresponding firmware and software versions of the portable radio communication equipment. In this case, the accessory has to be sent back to the manufacturer or distributor in order to perform the necessary software or firmware update.

### SUMMARY

The object of the present invention is therefore to provide a simple but reliable solution enabling the software or firmware update of accessories for portable radio communication equipments.

The above object is achieved by a portable radio communication equipment for communication in a wireless communication system according to claim 1. A portable radio communication equipment according to the present invention comprises transmitting and receiving means for transmitting and receiving information signals in said wireless communication system, data interface means for exchanging data with a further equipment, for example an accessory, control means for controlling the communication in said wireless communication system and the data exchange via said data interface means, whereby the control means enables a firmware update of the further equipment by receiving firmware update information via said wireless communication system and forwarding said received firmware update information to said further equipment via said data interface means.

It is to be noted that the term 'firmware' used in the present application and particularly the claims is intended to cover all kinds of firmware, software or any other executable code which can be used in electronic equipment, e.g. portable radio communication equipments, accessories therefore or any other kind of device to execute programs, applications and the like.

It is to be noted that the term 'portable radio communication equipment' includes all portable, hand-held or mobile equipments which are able to establish a data and/or voice communication in a wireless communication system, such as the GSM, the UMTS or any other suitable current or future communication system, as for example mobile telephones, pagers, communicators, i. e. electric organisers, smart phones and the like or devices or cards which can be connected to portable or stationary devices, e.g. PCMCIA cards, USB cards/sticks etc. connectable to laptops, PCs etc. Further, the terms 'further equipment' and 'electronic equipment' being adapted to exchange data with a portable radio communication equipment according to the present invention is intended to cover all kinds of portable or stationary electronic equipments, e.g. laptops, PCs and the like as well as accessories or portable radio equipments and so forth which are operating with firmware. The term accessory is intended to cover all kinds of accessories which can be connected to a portable radio communication equipment either in a wired or a wireless manner, such as cameras, memory extensions, MP3 players, flash-light devices and so forth.

Advantageously, the control means of the portable radio communication equipment according to the present invention further enables a check of the current firmware status of the further equipment by receiving status check information via said wireless communication system and forwarding said received status check information to said further equipment via said data interface means.

Further advantageously, the control means provides a virtual transparent serial connection for receiving information via said wireless communication system and forwarding said received information to said further equipment. The control means advantageously comprises a AT command parsing capability.

Further advantageously, the portable radio communication equipment comprises a user input means enabling a user to input an update instruction to be transmitted via the wireless communication system in order to initiate the transmission of the firmware update information to the portable radio communication equipment. Hereby, the control means advantageously provides a wireless application protocol interface enabling a user to input an update instruction to be transmitted in said wireless communication system via a wireless application protocol. Alternatively, the control means advantageously provides a message system interface enabling a user to input an update instruction to be transmitted in said wireless communication system via a message system.

Further advantageously, the update instruction transmitted via said wireless communication system comprises an indication about said data interface for forwarding the firmware update information to the further equipment.

The above object is further achieved by an electronic equipment according to claim 9. The electronic equipment is adapted to be connected to a portable radio communication equipment for communication in a wireless communication system according to the present invention and comprises a data interface means for exchanging data with a corresponding interface means of a connected portable radio communication equipment and control means for updating firmware of the electronic equipment according to a firmware update information received from a connected portable radio equipment.

Advantageously, the control means upon receiving a status check information from a connected portable radio communication equipment forwards a status information comprising the status of the current firmware version to the connected portable radio communication equipment. Further advantageously, the control means comprises an AT command parsing capability.

The above-mentioned object is further achieved by a method for controlling a portable radio communication equipment for communication in a wireless communication system according to claim 12, whereby the method comprises the step of controlling the communication in a wireless communication system and the data exchange via said data interface means of the portable radio communication equipment by enabling a firmware update of the further equipment by receiving firmware update information via said wireless communication system and forwarding said received firmware update information to said further equipment via said data interface means.

Advantageously, the control step further enables a check of the current firmware stages of said further equipment by receiving status check information via said wireless communication system and forwarding said received status check information to said further equipment via said data interface means. Hereby, the control step advantageously provides a virtual transparent serial connection for receiving said information via said wireless communication system and forwarding said received information to said further equipment.

The inventive method advantageously further comprises the step of enabling a user to input an update instruction to be transmitted via said wireless communication system in order to initiate the transmission of the firmware update information to the portable radio communication equipment. Hereby, the method advantageously provides an wireless application protocol interface enabling a user to input an update instruction to be transmitted in said wireless communication system via a wireless application protocol. Alternatively, the method advantageously provides a method system interface enabling a user to input an update instruction to be transmitted in said wireless communication system via a message system.

Further advantageously, the update instruction transmitted via said wireless communication system comprises an indication about said data interface for forwarding said firmware update information to said further equipment.

Further advantageously, the inventive method enables a check of the current firmware status of the further portable equipment by receiving status check information via said wireless communication system and forwarding said received status check information to said further equipment via said data interface means.

The above-object is further achieved by a method for controlling an electronic device according to claim 20, comprising data interface means for exchanging data with a portable radio communication equipment for communication in a wireless communication system, whereby the method comprises the step of updating firmware of the electronic equipment according to a firmware update information received from a connected portable radio equipment.

The method advantageously comprises the step receiving a status check information from a connected portable radio communication equipment and forwarding a status information comprising the status of the current firmware version to the connected portable radio communication equipment. Further, an error message can be generated and forwarded to a connected portable radio equipment upon detecting an error when operating the firmware of the electronic equipment.

The present invention further relates to the method and corresponding elements to process error messages generated by an error handler in an electronic equipment, such as an accessory, connected to a portable radio communication equipment. An error can occur upon connecting an electronic equipment to a portable radio communication equipment when starting to operate the firmware in the electronic equipment. For example, the firmware may not be compatible to the firmware of software used in the portable radio communication equipment. Alternatively, the firmware of the electronic equipment may not be up to date any more or the like. After the generation of a corresponding error message in the error handler of the electronic equipment, the error message is forwarded to the connected portable radio communication equipment which forwards the error information to a firmware upgrade server. In the firmware upgrade server, this error information can be processed by checking if a corresponding firmware update is available which is able to solve the error. If yes, the firmware of the electronic equipment is updated as described further above. In case that there is no firmware update available which solves or fixes the error, the firmware upgrade server may log the error in a corresponding statistic file, so that the next time a firmware upgrade is composed or generated, the error log can be used to make sure that the erros are fixed. Further, in case that there is no firmware update available for solving the detected error, the firmware upgrade server can generate and forward a corresponding information to the portable radio communication equipment and the electronic equipment notifying that there is currently no firmware available which is able to solve or fix the error. Further, the firmware upgrade server could send an notification to the portable radio communication equipment and/or the electronic equipment in case that a firmware update has been made available which solves the error, so that the corresponding firmware update can be downloaded to the electronic equipment.

Further advantageous features are defined in the dependent method claims.

### BRIEF DESCRIPTION OF THE DRAWINGS

In the following description, a preferred embodiment of the present invention is described in reference to the enclosed drawings, in which
Fig. 1 a schematic block diagram of a portable radio communication equipment and an accessory device according to the present invention as well as a base station with a connected firmware update server, and
Fig. 2 a schematic diagram of the command flow between an accessory, a portable radio communication equipment and a firmware update server.

### DETAILED DESCRIPTION OF EMBODIMENT

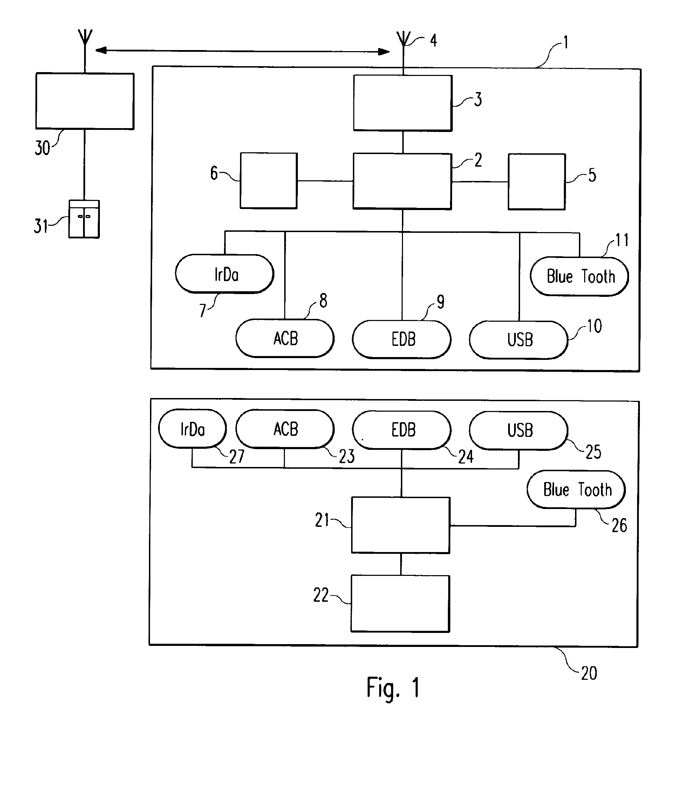

Fig. 1 shows a block diagram of a portable radio communication equipment 1, an accessory device 20 as well as a base station 30 and a firmware upgrade server 31.

The portable radio communication equipment 1 is adapted and comprises the necessary elements and means for the communication with the base station 30 in a wireless communication system, such as the GSM, the UMTS or any other current or future wireless communication system. The portable radio communication equipment 1 is for example a mobile phone, a personal digital assistant or any other device adapted to communicate in a wireless communication system. The portable radio communication equipment comprises a control means 2 for controlling the essential functions of the communication equipment 1, such as the transmission and receipt of data in a wireless communication system, the processing of data as well as the control of any other required function. The control means 2 can for example be a baseband processor, a micro processor, a central processing unit or any other suitable element. The control means 2 is connected to and controls a transmitting and receiving means 3 for the transmission and the receipt of signals in the wireless communication system via an antenna 4 connected to the transmitting and receiving means 3. The transmitting and receiving means 3 generally provides an interface for receiving and transmitting firmware update related information as explained in more detail below. In case that the wireless communication system transmits signals in a high frequency band, the transmitting and receiving means 3 is for example a high frequency or radio frequency part of the communication equipment 1. The control means 2 is further connected to and controls an input means 5, such as a keyboard or any other suitable input device enabling a user to input data and/or instructions to the communication equipment 1. Further, the control means 2 is connected to and controls a display means 6, which is for example a standard display element used in communication equipments, such as a liquid crystal display or the like.

The control means 2 is further connected to and controls one or more interface means enabling the connection to and the exchange of data with a further equipment. The further equipment can be an accessory 20 as shown in Fig. 1, a further portable radio communication equipment for a communication in a wireless communication system similar or identical to the communication equipment 1 or any other kind of portable or stationary electronic equipment operating with firmware and able to communicate in a wireless or wired way with a portable radio communication equipment 1. In the following, the update of firmware in the further equipment is explained in relation to an accessory 20 as shown in Fig. 1. The accessory 20 can be any kind of accessory to the portable radio communication equipment 1, such as a camera, a flash-light device for a camera, a memory extension, a MP3 player or any other current or future accessory for a portable radio communication equipment 1.

It is to be noted that the portable radio communication equipment 1 comprises at least one interface means enabling the communication and the exchange of data with a further portable equipment, whereby Fig. 1 shows several interface means 7, 8, 9, 10 and 11 as an example. The portable radio communication equipment 1 according to the present invention may comprise one, two, three or more interface means of different kinds. Hereby, the at least one interface means can be a wireless and/or a wired interface means. A wired interface means is hereby an interface means which needs to be connected e. g. via a plug-and-socket connection or any other suitable hardware connection to the further portable equipment. Examples for such wired interface means are an accessory control bus (ACB) interface 8, an external data bus (EDB) interface 9 and a universal serial bus (USB) interface 10 as shown in Fig. 1. Examples for wireless interface means are an infrared interface 7 and a Bluetooth interface 11 as shown in Fig. 1.

The accessory device 20 to be connected to the portable radio communication equipment 1 comprises one, two, three or more interface means enabling the data exchange with the portable radio communication equipment 1 in a wireless or wired manner. By the way of example only, the accessory device 20 is shown to comprise an accessory control bus (ACB) interface 23, an external data bus (EDB) interface 24, a universal serial bus (USB) interface 25 as well as a Bluetooth interface 26 and an infrared interface 27. However, the accessory device 20 can comprise any number and combinations of wired or wireless interface means. The accessory device 20 comprises a control means 21 which controls the interface means comprised in the accessory device 20 and thus the data exchange between the accessory device 20 and a portable radio communication equipment 1. Further, the control means 21 may control additional functionalities of the accessory device as necessary. The control means 21 is connected to a memory means 22 of the accessory device 20, whereby firmware and/or software, for example accessory application software, is stored in the memory means 22. The firmware and/or software stored in the memory means 22 is necessary for the execution of selected functionalities or of functionalities of the accessory device 20.

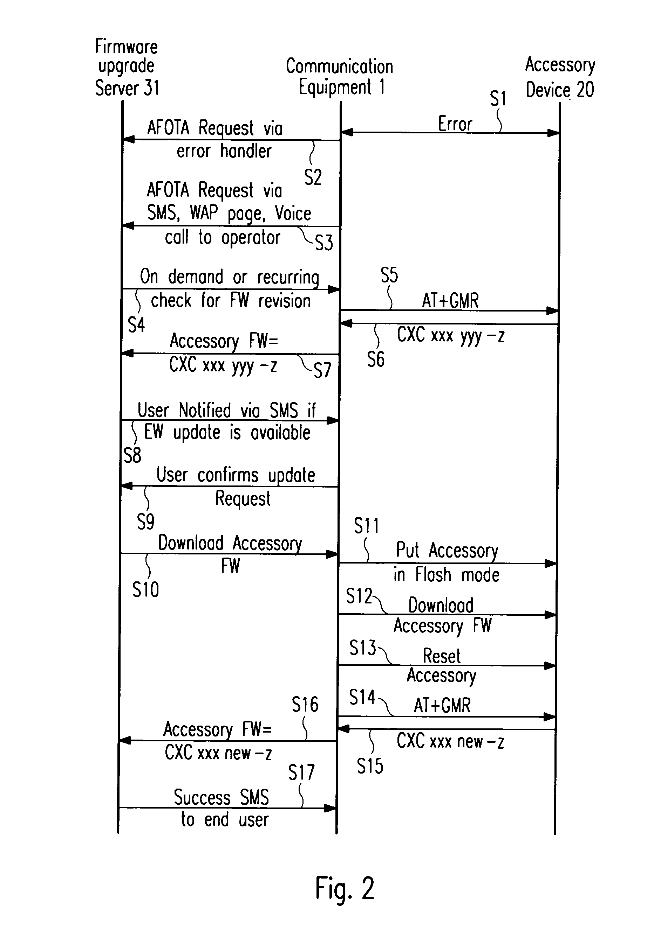

The firmware and/or software stored in the memory means 22 of the accessory device 20 can be updated with firmware update information transmitted from a firmware upgrade server 31 via a base station 30 of the wireless communication system and a portable radio communication equipment 1. Hereby, the firmware upgrade server 31 transmits, for example, a firmware delta which comprises information about the difference of the current firmware version stored in memory 22 and a more recent firmware version available and forwards the firmware delta to the base station 30 which transmits the firmware delta in the wireless communication system to the portable radio communication equipment. Alternatively, the firmware update information can be an entire firmware package with the new version of the firmware. Hereby, the transmission can be realised, for example, on the basis of a wireless application protocol supported by a wireless communication system, on the basis of a message system supported by the wireless communication system and the like. The firmware delta received by the portable radio communication equipment 1 is recognised and processed by the control means 2 and forwarded via the or one of the interface means 7, 8, 9, 10 or 11 of the portable radio communication equipment 1 to the accessory device 20. Each time an accessory device 20 is connected to a portable radio communication equipment 1 by means of a wired or a wireless interface, the control means 2 will have the information available through which interface or through which interfaces the communication equipment 1 is actually connected to an accessory device 20. Therefore, upon receiving the firmware delta, the firmware delta can be processed and forwarded via the or one of the interfaces to the accessory device 20. Alternatively, the firmware delta received from the firmware upgrade server 31 may additionally comprise information about the interface through which the portable radio communication equipment 1 is connected to the accessory device 20. This, of course, requires that the information about the connecting interface has been forwarded from the portable radio communication equipment 1 to the firmware upgrade server 1 before the firmware delta is transmitted. An example for such procedures will be explained in more detail in relation to Fig. 2.

In any case, the control means 2 together with the interface connecting the portable radio communication equipment 1 and the accessory device 20 have to provide a virtual transparent serial connection for the transmission of the firmware delta from the portable radio communication equipment 1 to the accessory device 20. Therefore, the interface means 7, 8, 9, 10, 11 of the portable radio communication equipment and the interface means 23, 24, 25, 26, 27 of the accessory device 20 have to be able to provide and support such a virtual transparent serial connection. Such a virtual transparent connection may e. g. be provided in form of a GPRS connection (in case of a GSM system) or a CSD (circuit switched data) connection. Hereby, for example, the so-called AT command set used for checking the status of a firmware version of portable equipments and to forward firmware delta information to a portable equipment could be specifically adapted also for the firmware update of accessory devices 20. In this case, the control means 20 as well as the control means 21 have to comprise and provide an AT command parsing capability, i. e. a functionality which enables to analyse a received AT command. In the case of the control means 2 of the portable radio communication equipment 1, this functionality may further comprise the capability of analysing the interface means through which the equipment 1 is connected to an accessory device 20 and which shall be used to forward the received firmware delta to the accessory device 20.

Upon receiving the firmware delta from a connected portable radio communication equipment 1, the control means 21 of the accessory device 20 controls and performs the upgrade procedure of the firmware stored in the memory means 22. Usually, program code such as firmware is stored in non-volatile memories, like for example a flash memory, so that the memory means 22 is for example a flash memory. However, any other suitable memory means can be used. In order to be able to perform a firmware upgrade, the control means 21 either automatically or on the basis of the input of a corresponding user instruction has to put the accessory device 20 into an upgrade mode which is sometimes called a flash mode. In this mode, the upgrade procedure of the firmware stored in the memory means 22 is performed in a manner which is corresponding or similar to the manner in which firmware upgrades are performed in portable equipments known in the art. Afterwards, the accessory device 20 has to be reset and restarted in order to activate the new and upgraded firmware.

It is to be understood that the update mechanism of the present invention can also be performed for more than one further equipment connected to the portable radio communication equipment at a time. For example, two or more further equipments can be connected via one of the interface means, e.g. the Bluetooth interface, or via different interface means to the portable radio communication equipment so that the firmware update can be performed simultaneously or in parallel for the several further equipments.

In Fig. 2, a schematic example for a command flow between an accessory device 20, a portable radio communication equipment 1 and a firmware upgrade server 31 is shown. The communication between the accessory device 20 and the portable radio communication equipment 1 takes place through which both devices are connected with each other as explained in relation to Fig. 1. The communication between the portable radio communication equipment 1 and the firmware update server 31 takes place on the basis of the wireless communication system between the portable radio communication equipment 1 and a base station 30 of the communication system as well as in a wired network or the like through which the base station 30 and the firmware update server 31 are being connected. The firmware update server 31 could also be called a firmware over the air (FOTA) server or accessory firmware over the air (AFOTA) server.

It is to be noted that the various messages and instructions exchange between the accessory device 20 and the communication equipment 1 as explained in the following are exchanged between the control means 21 of the accessory device 20 and the control means 2 of the communication equipment 1. Further, the instructions, information and messages exchanged between the communication equipment 1 and the firmware upgrade server 31 are exchanged between the control means 2 of the communication equipment 1 and a corresponding control means of the firmware upgrade server 31. For the initiation of the firmware upgrade procedure there are different alternatives. In a first alternative, upon connecting the accessory device 20 via one of the interface means to the portable radio communication equipment 1 or during the operation of the accessory device 20, an error message is forwarded in a step S1 from the accessory device 20 to the communication equipment 1.The error message could be generated in the accessory device upon detecting that the firmware is not up-to-date or does not match to and enable a proper operating in conjunction with a connected portable equipment 1. Generally, if an error is detected in the accessory device upon starting or attempting the execution of firmware, an error handler can initiate a firmware status check. Hereby, the error handler is preferably part of the accessory device 20 but can also be part of the portable radio communication equipment 1. The communication equipment 1, upon receiving an error message S1 from the accessory device 20, generates and forwards a firmware upgrade request to the firmware upgrade server 31 in a step S2. The firmware upgrade request (AFOTA request) can comprise information about the error identity for further use by the firmware upgrade server.

Alternatively, the initialisation could be performed by a user inputting a corresponding instruction to the portable radio communication equipment 1, after which a firmware upgrade request is generated and forwarded to the firmware upgrade server 31 by the control means 2 in a step S3. In any case the firmware upgrade request forwarded from the portable radio communication equipment 1 to the firmware upgrade server 31 can be forwarded in any suitable manner, for example as a message in a message system of the wireless communication system, such as the SMS system for example available in the GSM system, as a wireless application protocol message, as a voice call or the like. In a succeeding step S4, the firmware upgrade server 31 will forward a status check information to the portable radio communication equipment 1. In a further alternative, this status check information could be regularly forwarded by the firmware upgrade server 31 to the portable radio communication equipment 1. The status check information is a command, for example a AT command, such as a 'AT+GMR' command, which contains an enquiry about the current firmware version stored in a memory means 22 of the accessory device 20. The portable radio communication equipment 1 correspondingly forwards the status check information in a further step S5 to the accessory device 20 through the corresponding interface means providing the connection between the communication equipment 1 and the accessory device 20. The control means 21 of the accessory device 20, upon receiving the status check information, processes the status check and generates or retrieves the information about the current firmware version and forwards the status information to the communication equipment 1 in a further step S6. The communication equipment 1 forwards the status information in a succeeding step S7 to the firmware upgrade server 31, which processes the information and finds out if a more recent firmware version is available. If this is the case, the firmware upgrade server 31 could, for example via a message, send a corresponding information back to the communication equipment 1 in a further step S8. The information could for example be displayed on the display 6 of the communication equipment 1. In case that the initialisation of the procedure was caused by an error which occurred in the accessory device 20 as described in relation to steps S1 and S2, the information received from the firmware upgrade server 31 could additionally contain information if the error can be fixed by the available upgrade firmware or not. Afterwards, the user could input a corresponding instruction via the input means 5 in order to generate an update request message which is forwarded in a further step S9 to the firmware upgrade server 31. This instruction could include the confirmation that the portable equipment still has sufficient battery capacity and that the accessory will stay connected to the portable equipment until the update procedure is terminated. The firmware upgrade server 31 then generates or retrieves a firmware delta containing information about the difference between the most recent firmware version and the firmware version of the accessory device 20 and forwards a corresponding firmware update information in a succeeding step S10 to the communication equipment 1. The firmware upgrade information is received by the communication equipment 1 and processed. Hereby, the communication equipment 1 puts the accessory device 20 in an upgrade mode, for example the so-called flash mode, in a step S 11, whereafter the firmware upgrade information is forwarded to the accessory device 20 in step 512, in which the old firmware version is updated. Afterwards, the communication equipment 1 resets and restarts the accessory device 20 in a succeeding step S13, whereafter the communication equipment 1 may forward a status check information to the accessory device 20 in an additional step S14 in order to check if the firmware version has been successfully updated. The accessory device 20 returns the new firmware version information in a succeeding step S 15, whereby this information is forwarded by the communication equipment 1 to the firmware upgrade server 31 in a succeeding step S16. The firmware upgrade server 31 compares the received firmware status information to the newest available version of the firmware and, in case that the firmware upgrade was successful, returns a confirmation message back to the communication equipment 1 in an additional step S17, for example in a message system such as the SMS system.

Alternatively, the firmware upgrade server 31 after receipt of the status information in step S7 could detect that a more recent firmware version is not available or that the error detected in the accessory device 20 cannot be fixed. In this case, the firmware upgrade server 31 generates a corresponding log or information file for the firmware manufacturer with information that a new update of the firmware is necessary and what kind of errors should be fixed by the new update.

A corresponding notification that no firmware for fixing the error is available can be sent to the communication equipment 1 and the accessory device 20. Further, if at a later timepoint a firmware update for fixing the error is available, a corresponding notification could be sent to the communication equipment 1 and the accessory device 20 so that a firmware update procedure as set out above can be started.

The present invention thus enables a simple and reliable update of the firmware of accessory devices 20.

## Claims

1. Portable radio communication equipment (1) for communication in a wireless communication system, with
transmitting and receiving means (3) for transmitting and receiving information signals in said wireless communication system,
data interface means (7, 8, 9, 10, 11) for exchanging data with a further equipment (20),
control means (2) for controlling the communication in said wireless communication system and the data exchange via said data interface means,
whereby said control means (2) enables a firmware update of said further equipment by receiving firmware update information via said wireless communication system and forwarding said received firmware update information to said further equipment (20) via said data interface means (7, 8, 9, 10, 11).

2. Portable radio communication equipment (1) according to claim 1,
**characterized in,**
**that** said control means (2) further enables a check of the current firmware status of said further equipment (20) by receiving status check information via said wireless communication system and forwarding said received status check information to said further equipment (20) via said data interface means (7, 8, 9, 10, 11).

3. Portable radio communication equipment (1) according to claim 1 or 2,
**characterized in,**
**that** said control means (2) provides a virtual transparent serial connection for receiving said information via said wireless communication system and forwarding said received information to said further equipment (20).

4. Portable radio communication equipment (1) according to claim 1, 2 or 3,
**characterized in,**
**that** the control means (2) comprises a AT command parsing capability.

5. Portable radio communication equipment (1) according to one of the claims 1 to 4,
**characterized by**
comprising a user input means (5) enabling a user to input an update instruction to be transmitted via said wireless communication system in order to initiate the transmission of said firmware update information to the portable radio communication equipment (1).

6. Portable radio communication equipment (1) according to claim 5,
**characterized in,**
**that** said control means (2) provides a wireless application protocol interface enabling a user to input an update instruction to be transmitted in said wireless communication system via a wireless application protocol.

7. Portable radio communication equipment (1) according to claim 5,
**characterized in,**
**that** said control means (2) provides a message system interface enabling a user to input an update instruction to be transmitted in said wireless communication system via a message system.

8. Portable radio communication equipment (1) according to one of the claims 1 to 7,
**characterized in,**
**that** said update instruction transmitted via said wireless communication system comprises an indication about said data interface for forwarding said firmware update information to said further equipment (20).

9. Electronic equipment (20) to be connected to a portable radio communication equipment (1) for communication in a wireless communication system according to one of the preceding claims, with
a data interface means (23, 24, 25, 26, 27) for exchanging data with a corresponding interface means of a connected portable radio communication equipment (1), and control means (21) for updating firmware of the electronic equipment (20) according to a firmware update information received from a connected portable radio equipment.

10. Electronic equipment (20) according to claim 9,
**characterized in,**
**that** the control means (21) upon receiving a status check information from a connected portable radio communication equipment forwards a status information comprising the status of the current firmware version to the connected portable radio communication equipment (1).

11. Electronic equipment (20) according to claim 9 or 10,
**characterized in,**
**that** the control means (21) comprises an AT command parsing capability.

12. Method for controlling a portable radio communication equipment for communication in a wireless communication system, said portable radio communication equipment comprising transmitting and receiving means for transmitting and receiving information signals in said wireless communication system and data interface means for exchanging data with a further equipment,
said method comprising the step of controlling the communication in said wireless communication system and the data exchange via said data interface means by enabling a firmware update of said further equipment by receiving firmware update information via said wireless communication system and forwarding said received firmware update information to said further equipment via said data interface means.

13. Method according to claim 12,
**characterized by**
said control step further enabling a check of the current firmware status of said further equipment by receiving status check information via said wireless communication system and forwarding said received status check information to said further equipment via said data interface means.

14. Method according to claim 13,
**characterized in,**
**that** said control step provides a virtual transparent serial connection for receiving said information via said wireless communication system and forwarding said received information to said further equipment.

15. Method according to one of the claims 12, 13 or 14,
**characterized by**
the step of enabling a user to input an update instruction to be transmitted via said wireless communication system in order to initiate the transmission of said firmware update information to the portable radio communication equipment.

16. Method according to claim 15,
**characterized in,**
by providing a wireless application protocol interface enabling a user to input an update instruction to be transmitted in said wireless communication system via a wireless application protocol.

17. Method according to claim 15,
**characterized in**,
by providing a message system interface enabling a user to input an update instruction to be transmitted in said wireless communication system via a message system.

18. Method according to one of the claims 12 to 17,
**characterized in,**
**that** said update instruction transmitted via said wireless communication system comprises an indication about said data interface for forwarding said firmware update information to said further equipment.

19. Method according to one of the claims 12 to 18,
**characterized in**,
further enabling a check of the current firmware status of said further equipment by receiving status check information via said wireless communication system and forwarding said received status check information to said further equipment via said data interface means.

20. Method for controlling an electronic equipment comprising data interface means for exchanging data with a portable radio communication equipment for communication in a wireless communication system,
said method comprising the step of updating firmware of the electronic equipment according to a firmware update information received from a connected portable radio equipment.

21. Method according to claim 20,
**characterized in**,
the step of receiving a status check information from a connected portable radio communication equipment and forwarding a status information comprising the status of the current firmware version to the connected portable radio communication equipment.

22. Method according to claim 20 or 21,
**characterized in,**
**that** an error message is generated and forwarded to a connected portable radio equipment upon detecting an error when operating the firmware of the electronic equipment.
